# EUROPÄISCHE PATENTSCHRIFT

(11) **EP 1 701 236 B1**
(45) Veröffentlichungstag und Bekanntmachung des Hinweises auf die Patenterteilung: **29.04.2009**
(21) Anmeldenummer: 05027504.9
(22) Anmeldetag: 15.12.2005
(51) Int. Cl.: G05D 23/19

(54) **Temperaturregelvorrichtung für eine Heizvorrichtung, insbesondere einen Badheizkörper**
Temperature controlling device for a heating device, in particular a heating radiator for bathrooms
Dispositif de régulation de température pour un dispositif de chauffage, en particulier un radiateur de chauffage de bain

(30) Priorität: 11.03.2005 DE 102005011378
(43) Veröffentlichungstag der Anmeldung: 13.09.2006
(73) Patentinhaber: KERMI GmbH, 94447 Plattling (DE); Arbonia AG, 9320 Arbon (CH)
(72) Erfinder: Hutter, Marcel, 9475 Sevelen (CH); Wagner, Holger, 94554 Langenisarhofen (DE); Cenci, Danilo, 9320 Arbon (CH); Robl, Karl, 93479 Grafenwiesen (DE); Weissmann, Lars, 91725 Ehingen (DE); Hitzenberger, Robert, 84140 Loiching (DE)
(74) Vertreter: Mischung, Ralf

(56) Entgegenhaltungen:
- EP-A- 0 985 994
- DE-A1- 2 909 522
- DE-A1- 4 107 936
- GB-A- 2 091 913

## Beschreibung

Die Erfindung betrifft eine Temperaturregelvorrichtung für eine Heizvorrichtung, insbesondere einen Badheizkörper, mit der ein Stellglied der Heizvorrichtung in vorgebbarer Weise beispielsweise so angesteuert werden kann, dass die Raumtemperatur zu vorgegebenen Zeiten bestimmte Werte annimmt oder dass die Heizvorrichtung zu vorgegebenen Zeiten eine vorbestimmte Heizleistung abgibt.

Dabei wird der Begriff "Temperaturregelvorrichtung" im Folgenden unabhängig davon verwendet, ob die gewünschte Temperatur oder die gewünschte Heizleistung der Heizvorrichtung lediglich durch eine Steuerung im strengen Sinn, d.h. ohne die Verwendung einer geschlossenen Regelschleife, oder durch die Verwendung einer Regelung unter Verwendung einer geschlossenen Regelschleife erreicht wird.

Bekannte Temperaturregelvorrichtungen für eine Heizvorrichtung können beispielsweise unmittelbar an einem Heizkörper vorgesehen sein, beispielsweise in unmittelbarer Nachbarschaft des Heizkörperventils. Es ist des Weiteren bekannt, die eigentliche Temperaturregelvorrichtung an einem beliebigen Punkt im zu beheizenden Raum oder sogar in einem anderen Raum anzuordnen und die Verbindung zum Stellglied entweder leitungsgebunden oder drahtlos herzustellen. Selbstverständlich kann auch eine Trennung zwischen der eigentlichen Auswerte- und Steuereinheit der Regelvorrichtung und der Anzeige vorgenommen werden und die betreffenden Bestandteile an unterschiedlichen Orten vorgesehen sein. Diese können dann wiederum drahtgebunden oder drahtlos miteinander kommunizieren.

Es ist bekannt, bei derartigen Temperaturregelvorrichtungen die gewünschte Raumtemperatur oder die gewünschte Temperatur des Heizkörpers und damit die vom Heizkörper abgegebene Wärmeleistung als Funktion der Zeit vorwählbar bzw. programmierbar zu gestalten. Es kann dann für bestimmte Zeitabschnitte oder Zeitintervalle jeweils die gewünschte Solltemperatur (dies kann die Solltemperatur des zu beheizenden Raums oder die Solltemperatur der Heizvorrichtung sein), welche mit der an die Umgebung abgebbaren Wärmeleistung korrespondiert. Das Vorwählen der gewünschten Temperaturen in den gewünschten Zeiträumen erfolgt üblicherweise so, dass für jeden Tag der Woche der betreffende 24-Stunden-Zeitraum in mehrere, jedoch wenige Zeitintervalle aufgeteilt werden kann, wobei für jedes Zeitintervall die gewünschte Solltemperatur bzw. Heizleistung vorgegeben werden kann. Dies geschieht in einer Betriebsweise "Programmierung".

In der Betriebsweise Normalbetrieb erzeugt dann die Auswerte- und Steuereinheit der Temperaturregelvorrichtung ein Ansteuersignal für das Stellglied derart, dass in jedem betreffenden Zeitintervall jedes 24-Stunden-Zeitraums die gewünschte Solltemperatur erreicht wird bzw. die gewünschte Heizleistung abgegeben wird.

Die Anzeige in beiden Betriebsarten ist bei bekannten Vorrichtungen mit einer Digitalanzeige realisiert, auf der jeweils der Beginn und das Ende eines Zeitintervalls und der gewünschte Wert für die Solltemperatur bzw. für die Heizleistung digital eingegeben und abgespeichert werden kann. Während der Betriebsweise "Normalbetrieb" wird bei derartigen Vorrichtungen lediglich die aktuelle Zeit, gegebenenfalls einschließlich des aktuellen Wochentags, und die Solltemperatur für das gerade aktuelle Zeitintervall oder die tatsächlich erreichte Isttemperatur angezeigt.

Nachteilig bei derartigen Temperaturregelvorrichtungcn ist die relativ umständliche und wenig intuitive Programmierung sowie die Tatsache, dass in der Betriebsweise "Normalbetrieb" für eine Bedienperson nur rudimentäre Informationen erkennbar sind.

Aus der EP 0 985 994 A1 ist eine Vorrichtung zur Eingabe von Prozessparametem bekannt, die insbesondere für eine Heizungs-/ Klimaanlage geeignet ist. Bei dieser Vorrichtung wird im Normalbetrieb der programmierte zeitliche Verlauf des Solltemperatur mittels einer Touchsereen-Anzeige- und Eingabeeinheit angezeigt. Zur Programmierung in einem Programmiermodus müssen jedoch für einzelne Zeitpunkte (Ein- oder Ausschaltzeitpunkte) die betreffende absolute Zeit und die Temperatur vorgegeben werden. Dies geschieht mit jeweils Hilfe von Pfeiltasten "Up" und "Down", die auf der Touchscreen-Anzeige- und Eingabeeinheit angezeigt werden. Auch diese Art der Programmierung, insbesondere die Programmierung der Zeitpunkte ist relativ umständlich. Zudem können nur wenige, beispielsweise sechs Ein- bzw. Ausschaltzeitpunkte eingestellt werden. Die Programmierung eines komplizierteren Verlaufs ist nicht möglich.

Aus der DE 41 07 936 A1 ist eine elektronische Schaltuhr bekannt, welche ein Touchscreen-Anzeige aufweist, mit der sowohl im Programmiermodus als auch im Normalbetrieb der Schaltuhr eine 24-Stundenscala anzeigt, die in 15-Minuten-Intervalle eingeteilt ist. Durch Berühren der 15-Minuten-Segmente kann im Programmiermodus die Funktion "Ein" bzw. "Aus" der Schaltuhr programmiert werden. Dies hat den Vorteil einer einfachen intuitiven Programmierung, wobei gleichzeitig das Schaltprofil, d.h. die Zeiträume, in denen die Stellungen "Ein" bzw. "Aus" vorgegeben sind, in der normalen Betriebsweise grafisch dargestellt ist. Diese Art der Programmierung eignet sich jedoch nicht unmittelbar für eine Temperaturregelvorrichtung, da nur Ein- und Ausschaltzeitpunkte vorgebbar sind. Unterschiedliche Betriebmodi oder ein gewünschter kompliziertere Heizverlauf lässt sich mit diesem Prinzip nicht auf einfache Weise realisieren.

Der Erfindung liegt daher ausgehend von diesem Stand der Technik die Aufgabe zugrunde, eine Temperaturregelvorrichtung für eine Heizvorrichtung, insbesondere einen Badheizkörper, zu schaffen, welche auch für mehrere unterschiedliche Betriebsmodi einfach und intuitiv für einen bestimmten Zeitraum programmierbar ist und welche auch während der Betriebsweise "Normalbetrieb" einer Bedienperson diejenigen Informationen auf einfache und leicht interpretierbare Weise anzeigt, die erforderlich sind, um zu beurteilen, ob gegebenenfalls eine Änderung des programmierten zeitlichen Verlaufs für den Heizmodus erforderlich ist.

Die Erfindung löst diese Aufgabe mit den Merkmalen des Patentanspruchs 1.

Die Erfindung geht von der Erkenntnis aus, dass die Verwendung einer Touchscreen-Anzeige- und Eingabeeinheit eine intuitive Bedienung, insbesondere eine intuitive und einfache Programmierung der Temperaturregelvorrichtung, insbesondere des zeitlichen Verlaufs für den Heizmodus ermöglicht.

In an sich bekannter Weise setzt sich der zeitliche Verlauf des Heizmodus aus mehreren Zeitintervallen zusammen. Dabei werden nicht nur einige wenige, beispielsweise ein bis drei Zeitintervalle für einen vorgegebenen Zeitraum, beispielsweise einen 24-Stunden-Zeitraum eines Tages verwendet, sondern eine Vielzahl von Zeitintervallen. Die Zeitintervalle können beispielsweise eine zeitliche Dauer von 10 bis 60 Minuten, vorzugsweise 30 Minuten, aufweisen.

Auf der Touchscreen-Anzeige- und Eingabeeinheit wird eine in die Vielzahl der einzelnen Zeitintervalle aufgeteilte Zeitskala, beispielsweise eine 24-Stunden-Zeitskala, zur Darstellung des vorgegebenen zeitlichen Verlaufs für die Solltemperatur fest abgebildet oder während des Betriebs der Temperaturregelvorrichtung durch eine entsprechende Ansteuerung durch die Auswerte- und Steuereinheit abgebildet.

In der Betriebsweise "Normalbetrieb" steuert die Auswerte- und Steuereinheit die Touchscreen-Anzeige- und Eingabeeinheit so an, dass für jedes Zeitintervall der Zeitskala der im betreffenden Zeitintervall wirksame Heizmodus grafisch dargestellt wird.

Hierdurch ist in dieser Betriebsweise für eine Bedienperson auf einen Blick erkennbar, welcher Verlauf für den Heizmodus programmiert wurde. Es kann daher über eine gegebenenfalls erforderliche Änderung des zeitlichen Verlaufs entschieden werden, ohne dass in die Betriebsweise "Programmierung" geschaltet werden müsste, um anhand der hier ersichtlichen Werte die aktuelle Programmierung zu überprüfen.

In der Betriebsweise "Programmierung" kann bei der erfindungsgemäßen Temperaturregelvorrichtung durch das Verwenden einer Touchscreen-Anzeige- und Eingabeeinheit durch das Berühren vorbestimmter Positionen oder Bereiche innerhalb der einzelnen, auf der Touchscreen-Anzeige- und Eingabeeinheit abgebildeten Zeitintervalle der Zeitskala der für jedes Zeitintervall gewünschte Heizmodus bestimmt werden.

Bei der bevorzugten Ausführungsform der Erfindung wird jeweils für einen Wochentag ein 24-Stunden-Verlauf des Heizmodus verwendet, wobei in der Betriebsweise "Normalbetrieb" jeweils der zugehörige Verlauf des Heizmodus für den zugehörigen 24-Stunden-Zeitraum angezeigt wird.

Der Heizmodus umfasst dabei erfindungsgemäß zumindest die Alternative "Heizung Aus" und mehrere mögliche Heizmodi "Heizen auf vorgegebene Solltemperatur T_{soll,i}". Dabei erzeugt die Auswerte- und Steuereinheit während eines aktiven Heizmodus "Heizung Aus" ein Ansteuersignal, mit dem das Stellglied so angesteuert wird, dass die Heizvorrichtung keine Heizleistung abgibt. Während eines Heizmodus "Heizen auf vorgegebene Solltemperatur T_{soll,i}" erzeugt die Auswerte- und Steuereinheit jeweils ein Ansteuersignal, mit dem das Stellglied so angesteuert wird, dass die Heizvorrichtung eine zur Erreichung einer vorgegebenen Solltemperatur geeignete Heizleistung abgibt. Beispielsweise bietet sich die Verwendung zweier derartiger Heizmodi an, wobei ein erster Heizmodus "Heizen auf vorgegebene Solltemperatur T_{soll,1}" ein abgesenktes Temperaturniveau mit einer niedrigen Solltemperatur definiert und ein zweier Heizmodus "Heizen auf vorgegebene Solltemperatur T_{soll,2}" ein zweites Temperaturniveau mit einer höheren Solltemperatur. Auf diese Weise kann beispielsweise nachts die Heizung komplett ausgeschaltet werden (Heizmodus "Heizung Aus" aktiv) und tagsüber die Temperatur auf das höhere Temperaturniveau eingestellt werden, zu Zeiten, in denen sich üblicherweise Personen im betreffenden Raum befinden. Während der Tageszeiten, zu denen sich normalerweise niemand im betreffenden Raum befindet, kann die Temperatur dann auf das angesenkte Niveau reduziert werden. Dies ermöglicht ein schnelleres Aufheizen auf die höhere Temperatur, wenn dies erforderlich ist.

Anstelle eines Heizmodus "Heizen auf vorgegebene Solltemperatur T_{soll,i}" kann auch ein Heizmodus "Heizen mit vorbestimmter Sollheizleistung P_{soll,i}" verwendet werden. Hierbei erzeugt die Auswerte- und Steuereinheit jeweils ein Ansteuersignal, mit dem das Stellglied so angesteuert wird, dass die Heizvorrichtung eine absolut oder relativ vorgegebene Heizleistung abgibt.

Nach der Erfindung ist für jedes Zeitintervall der Zeitscala sowohl in der Betriebsweise "Programmierung" als auch in der Betriebsweise "Normalbetrieb" eine aus einem oder mehreren Segmenten bestehende Balkenanzeige vorgesehen, wobei jedes Segment den Status "aktiviert" oder "deaktiviert" annehmen kann.

In diesem Fall wird man vorzugsweise den Heizmodus "Heizung Aus", der während eines Zeitintervalls aktiv ist oder aktiv sein soll, die Anzeige eines Balkens der für den betreffenden Zeitraum maßgeblichen Balkenanzeige zuordnen, bei dem sämtliche Segmente den Status "deaktiviert" aufweisen. Die Anzeige eines Balkens mit einer Anzahl von i aufeinander folgenden Segmenten kann dann jeweils dem Heizmodus auf vorgegebene Solltemperatur T_{soll,i}" oder "Heizen mit vorbestimmter Sollheizleistung P_{soll,i}" zugeordnet werden. Mit anderen Worten: Sind beispielsweise zwei unterschiedliche Heizmodi "Heizen auf vorgegebene Solltemperatur T_{soll,1}" und "Heizen auf vorgegebene Solltemperatur T_{soll,2}" vorgesehen, so kann eine Balkenanzeige, die maximal zwei Balken vorsieht, mit einem aktivierten Segment dem Modus "Heizen auf vorgegebene Solltemperatur T_{soll,1}" zugeordnet werden und eine Balkenanzeige mit zwei aktivierten Segmenten dem Heizmodus "Heizen auf vorgegebene Solltemperatur T_{soll,2}". Selbstverständlich können auch mehrere derartige Heizmodi mit unterschiedlichen, ansteigenden Solltemperaturen I_{soll,i} vorgesehen sein.

In der bevorzugten Ausführungsform ist die Zeitscala als geschlossener Ring auf der Touchscreen-Anzeige- und Eingabeeinheit abgebildet. Dies ermöglicht durch die an eine Analoguhr angelehnte Anzeige ein einfaches und schnelles Ablesen des vorgegebenen zeitlichen Verlaufs für den Heizmodus.

Nach einer Ausführungsform der Erfindung kann die Zeitscala zusätzlich zur Anzeige des in jedem Zeitintervall wirksamen Heizmodus eine Anzeige der aktuellen Zeit umfassen. Dies kann beispielsweise durch das Vorsehen eines weiteren, beispielsweise leicht abgesetzten Segments einer Balkenanzeige für jedes Zeitintervall geschehen, wobei dieses zusätzliche Segment dann aktiviert wird, wenn die aktuelle Zeit innerhalb des betreffenden Zeitintervalls liegt.

Bei der bevorzugten Ausführungsform der Erfindung sind auf der Touchscreen-Anzeige- und Eingabeeinheit mehrere Schalt- und Anzeigebereiche definiert, wobei jeder Schalt- und Anzeigebereich je nach Betriebsweise sowohl als Schaltknopf dienen kann, der gleichzeitig anzeigt, welche ihm zugeordnete Funktion bei Berührung ausgelöst werden kann, als auch als reine Anzeige der betreffenden gewählten Funktion. Dabei kann jedem Schalt- und Anzeigebereich in seiner Funktion als Schaltknopf eine andere grafische Ausgestaltung zugeordnet sein als in seiner Funktion als reine Anzeige.

Hierdurch wird die Bedienung der Temperaturregelvorrichtung weiter vereinfacht und kann tatsächlich intuitiv ausgestaltet werden, wodurch es einer Bedienperson erspart bleibt, umfangreiche Handbücher zu lesen, bevor eine korrekte Bedienung der Temperaturregelvorrichtung möglich ist.

Die Verwendung einer Touchscreen-Anzeige- und Eingabeeinheit ermöglicht es weiterhin, abhängig vom Funktionszustand der Temperaturregelvorrichtung nur diejenigen Schalt- und Anzeigebereiche tatsächlich anzuzeigen, die im momentanen Betriebszustand tatsächlich sinnvollerweise betätigt werden können oder die eine sinnvolle Anzeige für den jeweiligen Funktionszustand darstellen.

Nach einer weiteren Ausführungsform der Erfindung kann zusätzlich zu den Betriebsweisen "Normalbetrieb" und "Programmierung" eine Betriebsweise "Boost" vorgesehen sein. In dieser Betriebsweise erzeugt die Auswerte- und Steuereinheit nach dem Start der Betriebsweise ein Ansteuersignal, welches das Stellglied der Heizvorrichtung so ansteuert, dass diese die maximale oder eine vorgegebene Boost-Sollheizleistung P_{soll,boost} abgibt oder eine vorgegebene Boost-Solltemperatur T_{soll,boost} erzeugt. Diese Betriebsweise kann nach dem Start für eine vorgegebene Zeitspanne, beispielsweise eine Stunde beibehalten werden.

Nach einer weiteren Ausführungsform der Erfindung kann zusätzlich zu den Betriebsweisen "Normalbetrieb" und "Programmierung" eine Betriebsweise "Trocknen" vorgesehen sein. Mit dieser Betriebsweise kann insbesondere bei Badheizkörpern, die häufig für das Trocknen von Handtüchern oder anderen Wäschestücken verwendet werden, zu gewünschten Zeiten eine Heizleistung abgegeben werden, die ein optimales Trocknen der Wäschestücke ermöglicht.

Auch für diese Betriebsweise kann eine separater zeitlicher Verlauf für den gewünschten Heizmodus vorgesehen werden, welcher mittels der Touchscreen-Anzeige- und Eingabeeinheit bei Auswahl der Betriebsweise "Trocknen" analog zur Anzeige des Verlaufs des Heizmodus in der Betriebsweise "Normalbetrieb" angezeigt wird. Dieser Verlauf des Heizmodus kann ebenfalls wiederum in der Betriebsweise "Programmierung" separat und analog zur Programmierung des Verlaufs des Heizmodus für die Betriebsweise "Normalbetrieb" programmiert werden. Als mögliche Heizmodi kann in jedem Fall wieder der Heizmodus "Heizung Aus" für diejenigen Zeitintervalle programmiert werden, in denen keine Trocknung von Bekleidungsstücken vorgenommen werden soll. Daneben können auch die für die Betriebsweise "Normalbetrieb" programmierbaren Heizmodi auswählbar sein.

Bei der bevorzugten Ausführungsform wird man jedoch für die Betriebsart "Trocknen" einen weiteren Heizmodus "Trocknen" definieren, für den die Auswerte- und Steuereinheit nach einem Start der Betriebsweise "Trocknen" ein Ansteuersignal erzeugt, welches das Stellglied der Heizvorrichtung so ansteuert, dass diese die maximale oder eine vorgegebene Trocknungs-Sollheizleistung P_{soll,trocknen} abgibt oder eine vorgegebene Trocknungs-Solltemperatur T_{soll,trocknen} erzeugt.

Nach einer Ausführungsform der Erfindung kann die Betriebsweise "Trocknen" so realisiert werden, dass bei Überschreiten eines vorgegebenen Wertes für die Isttemperatur des Raums, in dem sich die Heizvorrichtung befindet, ein erster, niedrigerer Wert für die vorgegebene Trocknungs-Sollheizleistung P_{soll,trocknen,1} oder die vorgegebene Trocknungs-Solltemperatur T_{soll,trocknen,1} verwendet wird und bei Überschreiten des vorgegebenen Wertes für die Isttemperatur ein zweiter, höherer Wert für die vorgegebene Trocknungs-Sollheizleistung P_{soll,trocknen,2} oder die vorgegebene Trocknungs-Solltemperatur T_{soll,trocknen,2}.

An dieser Stelle sei darauf hingewiesen, dass die Trocknungs-Solltemperaturen T_{soll,trocknen,i} im Regelfall keine Solltemperaturen für den Raum darstellen, in dem sich die Heizvorrichtung befindet, sondern Solltemperaturen für die Heizvorrichtung.

Nach einer Ausführungsform der Erfindung erzeugt die Auswerte- und Steuereinheit bei Aktivierung der Betriebsweise "Trocknen" während der Betriebsweise "Normalbetrieb" das Steuersignal ausschließlich abhängig vom gespeicherten Verlauf des Heizmodus für die Betriebsweise "Trocknen". Erst nach dem Zurückschalten in die Betriebsweise "Normalbetrieb" ist wieder der gespeicherte Verlauf für den Heizmodus für die Betriebsweise "Normalbetrieb" maßgeblich.

Nach einer anderen Ausführungsform der Erfindung kann die Auswerte- und Steuereinheit bei Aktivierung der Betriebsweise "Trocknen" während der Betriebsweise "Normalbetrieb" das Steuersignal abhängig vom gespeicherten Verlauf des Heizmodus für die Betriebsweise "Trocknen" und abhängig vom Verlauf des Heizmodus für die Betriebsweise "Normalbetrieb" erzeugen, wobei für jedes Zeitintervall jeweils der höhere Wert für die vorgegebene Solltemperatur T_{soll,i} oder die vorbestimmte Sollheizleistung P_{soll,i} der beiden zeitlichen Verläufe für den Heizmodus verwendet wird.

Selbstverständlich kann auch ein Umschalten auf die Betriebsweise "Trocknen" aus der Betriebsweise "Normalbetrieb" heraus blockiert sein. In diesem Fall kann ausgehend von einer Betriebsweise "Aus" entweder nur die Betriebsweise "Trocknen" oder die Betriebsweise "Normalbetrieb" gewählt werden.

Nach einer Ausführungsform der Erfindung kann die Temperaturregelvorrichtung einen internen Temperatursensor zur Erfassung einer Isttemperatur aufweisen oder der Temperaturregelvorrichtung kann das Signal eines externen Temperatursensors zur Erfassung einer Isttemperatur zugeführt sein. Die Auswerte- und Steuereinheit kann in diesen Fällen das Steuersignal für das Stellglied zur Veränderung der Heizleistung der Heizvorrichtung im Sinne einer geschlossenen Regelschleife durch einen Vergleich einer für das betreffende Zeitintervall vorgegebenen Solltemperatur Tₛₒₗₗ mit der erfassten Isttemperatur Tᵢₛₜ erzeugen.

In diesem Zusammenhang sei darauf hingewiesen, dass das Steuersignal entweder so erzeugt werden kann, dass ein Parameter des Steuersignals der Stellung des Stellglieds proportional ist. Dies setzt selbstverständlich ein stufenlos einstellbares oder zumindest in feinen Schritten einstellbares Stellglied voraus.

Kann das Stellglied nur die Funktionen "Aus" und "Volle Leistung" realisieren, so kann das Steuersignal als digitales Signal ausgeführt werden, welches das Stellglied so ansteuert, dass die gewünschte mittlere Leistung Pₛₒₗₗ abgegeben wird. Eine derartige digitale Ansteuerung eines Stellglieds um eine gewünschte (mittlere) Solltemperatur oder Sollheizleistung zu erreichen, ist jedoch in vielfältigen Ausführungsformen bekannt.

Weitere Ausführungsformen der Erfindung ergeben sich aus den Unteransprüchen. Die Erfindung wird nachfolgend anhand eines in der Zeichnung dargestellten Ausführungsbeispiels näher erläutert. In der Zeichnung zeigen:
- Fig. 1: eine perspektivische Ansicht einer Temperaturregelvorrichtung nach der Erfindung mit einer Wandbefestigung;
- Fig. 2: ein schematisches Blockdiagramm der Temperaturregelvorrichtung in Fig. 1;
- Fig. 3: eine Darstellung aller möglichen Teilanzeigen der Touchscreen-Anzeige- und Eingabeeinheit der Regelvorrichtung in Fig. 1;
- Fig. 4: eine Darstellung der in der Betriebsweise "Normalbetrieb" sichtbaren Anzeigen der Touchscreen-Anzeige- und Eingabeeinheit;
- Fig. 5: eine Ansicht der in der Betriebsweise "Programmierung" sichtbaren Anzeigen der Touchscreen-Anzeige- und Eingabeeinheit bei der Programmierung des zeitlichen Verlaufs des Heizmodus für die Betriebsweise "Normalbetrieb";
- Fig. 6: eine Darstellung der in der Betriebsweise "Trocknen" sichtbaren Anzeigen der Touchscreen-Anzeige- und Eingabeeinheit;
- Fig. 7: eine Darstellung der in der Betriebsweise "Programmierung" sichtbaren Anzeigen der Touchscreen-Anzeige- und Eingabeeinheit bei der Programmierung des zeitlichen Verlaufs des Heizmodus für die Betriebsweise "Trocknen" und
- Fig. 8: ein Ablaufdiagramm für eine mit zwei unterschiedlichen Heizmodi realisierte Betriebsweise "Trocknen".

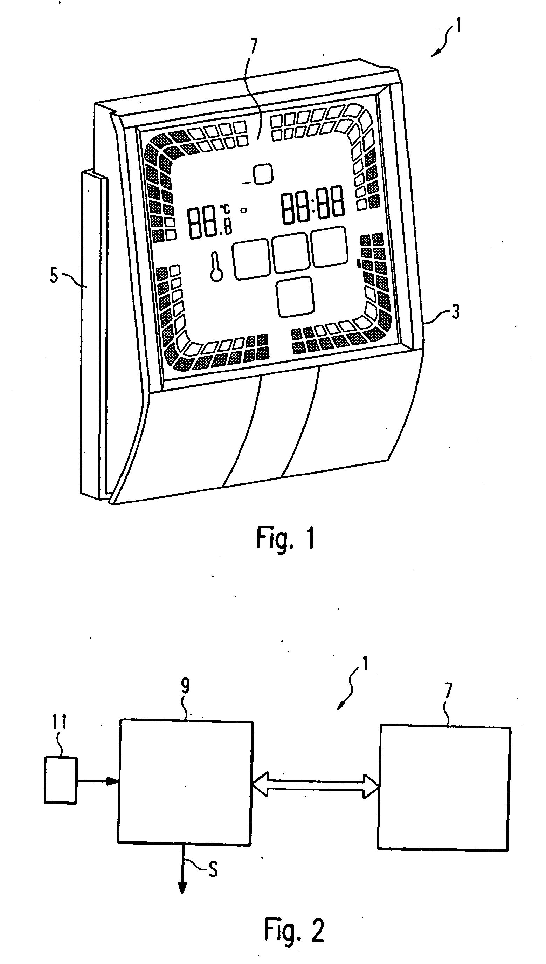

Die in Fig. 1 dargestellte Temperaturregelvorrichtung 1 weist ein Gehäuse 3 auf, welches mit einer Wandhalterung 5 an einer Wand, vorzugsweise in einem mittels einer nicht näher dargestellten Heizvorrichtung zu beheizenden Raum befestigt ist. Die nicht dargestellte Heizvorrichtung weist ein Stellglied auf, welches von der Temperaturregelvorrichtung 1 ansteuerbar ist. Bei dem Stellglied kann es sich beispielsweise um einen Schalter für eine elektrische Zusatzheizung eines Badheizkörpers handeln oder aber um ein elektrisch betätigbares Ventil eines üblichen, von einem Heizmedium durchströmten Heizkörper.

Die Temperaturregelvorrichtung 1 umfasst eine Touchscreen-Anzeige- und Eingabeeinheit 7, auf der weiter unten beschriebene Anzeigen und Schaltflächen darstellbar sind.

Fig. 2 zeigt ein schematisches Blockdiagramm für den Aufbau der Temperaturregelvorrichtung 1 in Fig. 1. Die Temperaturregelvornchtung 1 umfasst eine Auswerte- und Steuereinheit 9, die mit der Touchscreen-Anzeige- und Eingabeeinheit 7 verbunden ist. Die Auswerte- und Steuereinheit 9 steuert dabei die Touchscreen-Anzeige- und Eingabeeinheit 7 so an, dass die gewünschten Anzeigen sichtbar werden und erhält von der Touchscreen-Anzeige- und Eingabeeinheit 7 Steuersignale, die melden, welche Schaltflächen auf der Touchscreen-Anzeige- und Eingabeeinheit 7 berührt bzw. gedrückt wurden.

Abhängig von den ihr zugeführten Informationen erzeugt die Auswerte- und Steuereinheit 9 ein Ansteuersignal S für das Stellglied der nicht näher dargestellten Heizvorrichtung. Zusätzlich kann der Auswerte- und Steuereinheit 9, wie in Fig. 2 dargestellt, das Signal eines Temperatursensors 11 zugeführt sein, welcher zur Erfassung einer Isttemperatur Tᵢₛₜ dient. Bei der Isttemperatur Tᵢₛₜ kann es sich um die Isttemperatur des zu beheizenden Raums handeln oder um die tatsächliche Temperatur der Heizvorrichtung.

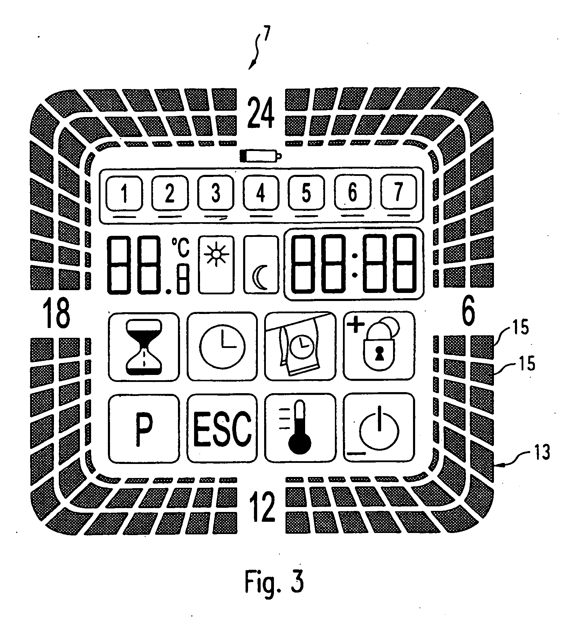

In Fig. 3 ist die Anzeige der Touchscreen-Anzeige- und Eingabeeinheit 7 mit allen möglichen Anzeigen des beschriebenen Ausführungsbeispiels dargestellt. An ihrem äußern Umfang weist die Anzeige eine 24-Stunden-Zeitskala 13 auf. Die Zeitskala 13 ist in Umfangsrichtung unterteilt in einzelne Zeitintervalle 15 von jeweils 30 Minuten Dauer. In radialer Richtung weist die 24-Stunden-Zeitskala 13 für jedes Zeitintervall 15 eine Balkenanzeige bestehend aus jeweils drei Segmenten auf. Die drei Segmente sind dabei jeweils in radialer Richtung angeordnet.

Wie weiter unten verdeutlicht werden wird, dienen die beiden jeweils radial äußeren Segmente einer Balkenanzeige eines Zeitintervalls 15 zur Anzeige des jeweils aktuellen Heizmodus. Das jeweils radial innerste Segment dient zur Anzeige, welches Zeitintervall jeweils gerade aktiv ist, d.h. es wird jeweils das radial innerste Segment desjenigen Zeitintervalls aktiviert, in welches die aktuelle Tageszeit fällt. Innerhalb der 24-Stunden-Zeitscala 13 sind mehrere Schalt- und Anzeigebereiche definiert, wobei jeder Schalt- und Anzeigebereich je nach dem vorliegenden Funktionszustand der Temperaturregelvorrichtung 1 sowohl als Schaltknopf dienen kann, der gleichzeitig anzeigt, welche ihm zugeordnete Funktion bei einer Berührung ausgelöst werden kann, als auch als reine Anzeige der betreffenden Funktion, wenn diese gewählt wurde. Dabei kann jedem Schalt- und Anzeigebereich in seiner Funktion als Schaltknopf eine andere grafische Ausgestaltung zugeordnet sein, als in seiner Funktion als reine Anzeige. Bei der gemäß Fig. 3 gewählten Darstellung auf der Touchscreen-Anzeige- und Eingabeeinheit 7 wurde für einen aktivierbaren Schaltknopf eine Darstellung gewählt, bei der eine Ziffernanzeige oder ein Symbolanzeige jeweils von einem Rahmen umgeben ist. Wurde die betreffende Funktion durch das Berühren des jeweiligen Schaltknopfs ausgelöst, so entfällt der jeweilige Rahmen. Auf diese Weise ist für eine Bedienperson auf den ersten Blick erkennbar, in welchem Funktionszustand sich die Temperaturregelvorrichtung 1 befindet.

An dieser Stelle sei nochmals ausdrücklich darauf hingewiesen, dass die in Fig. 3 dargestellte Anzeige nur zur Verdeutlichung aller möglichen Anzeigeelemente dient, dass eine derartige Anzeige jedoch keinem in der Praxis vorkommenden Zustand der Temperaturregelvorrichtung 1 entspricht.

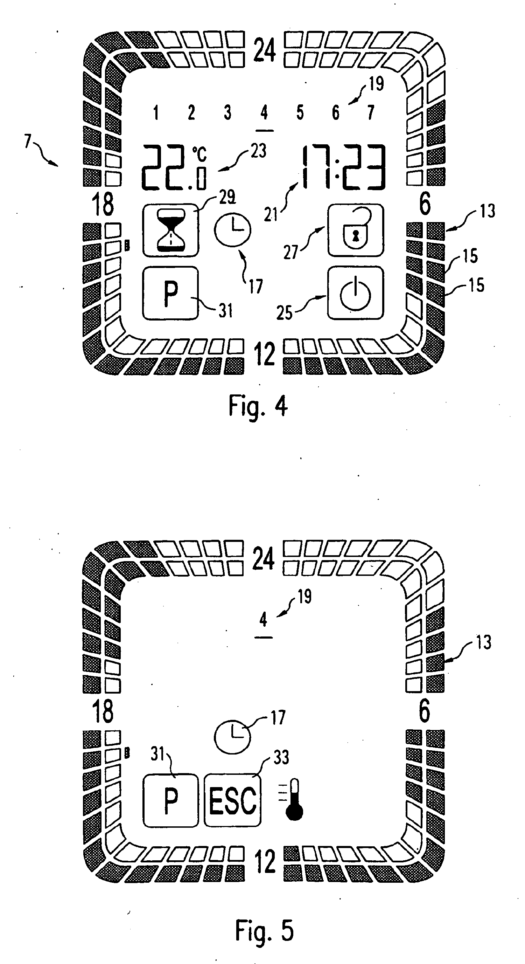

Aus der in Fig. 4 dargestellten Anzeige der Touchscreen-Anzeige- und Eingabeeinheit 7 ist auf den ersten Blick ersichtlich, dass sich die Vorrichtung in einer Betriebsweise "Normalbetrieb" befindet, welche durch das Symbol einer Analoguhr angezeigt wird. Der zugehörige Schalt- und Anzeigebereich 17 lässt durch das Fehlen des Rahmens um das Symbol einer Analoguhr erkennen, dass es sich nicht um einen Schaltknopf, sondern lediglich um eine Anzeige handelt. Die betreffende Schalt- und Anzeigefläche wurde somit bereits in ihrer Funktion als Schaltknopf berührt und damit die Betriebsweise "Normalbetrieb" eingeschaltet.

In der Funktionsweise "Normalbetrieb" ist auf der 24-Stunden-Zeitscala 13, welche für jedes Zeitintervall 15 von 30 Minuten Dauer eine Balkenanzeige mit drei Segmenten (vgl. oben) aufweist, auf den ersten Blick ersichtlich, welcher Heizmodus in jedem der Zeitintervalle 15 der 24-Stunden-Zeitscala 13 voreingestellt wurde.

Im dargestellten Ausführungsbeispiel sind für den Heizmodus drei Alternativen vorgesehen, nämlich der Heizmodus "Heizung Aus", in dem sämtliche Segmente eines Zeitintervalls 15 nicht ausgefüllt dargestellt sind, der Heizmodus "Heizen auf vorgegebene Solltemperatur T_{soll,i}, in dem auf ein abgesenktes Temperaturniveau aufgeheizt wird, wobei für diesen Heizmodus jeweils nur das radial äußerste Segment einer Balkenanzeige eines Zeitintervalls 15 aktiviert ist, und der Heizmodus "Heizen auf vorgegebene Solltemperatur T_{soll,2}" in dem auf eine vorgegebene Normaltemperatur mit höherem Niveau aufgeheizt wird und für den jeweils die zwei radial äußeren Segmente einer Balkenanzeige eines Zeitintervalls 15 ausgefüllt dargestellt sind. Damit ist für die Darstellung gemäß Fig. 4 auf den ersten Blick erkennbar, dass im Zeitraum zwischen 22 Uhr und 4 Uhr Heizvorrichtung ausgeschaltet wird und während der Zeiträume von 4 Uhr bis 6 Uhr und von 8 Uhr bis 19 Uhr auf das abgesenkte Temperaturniveau T_{soll,1} geheizt wird. In den Zeiträumen von 6 Uhr bis 8 Uhr und 19 Uhr bis 22 Uhr wird die Heizvorrichtung bzw. der zu beheizende Raum auf das normale, höhere Temperaturniveau T_{soll,2} geheizt.

Des Weiteren ist aus der Wochentagsanzeige 19 sofort erkennbar, dass das 24-Stunden-Profil für den Heizmodus für den vierten Wochentag, d.h. für Donnerstag, Gültigkeit hat. Ein derartiges 24-Stunden-Profil für den Heizmodus kann bei der in der Zeichnung dargestellten Ausführungsform für jeden Wochentag separat programmiert werden.

Schließlich lässt die in Fig. 4 dargestellte Anzeige der Touchscreen-Anzeige- und Eingabeeinheit 7 die aktuelle Zeit mit dem zugehörigen Schalt- und Anzeigebereich 21 erkennen. Das Fehlen des Rahmens um diesen Schalt- und Anzeigebereich 21 zeigt, dass es sich im dargestellten Status lediglich um eine Anzeige handelt. Gleiches gilt für die Anzeige der Isttemperatur mittels des zugehörigen Schalt- und Anzeigebereichs 23. Das Fehlen eines Rahmens lässt auch hier erkennen, dass es sich lediglich um eine Anzeige handelt.

Schließlich lässt die Anzeige in Fig. 4 zusätzlich erkennen, welches Zeitintervall 15 gerade aktiv ist, nämlich das Zeitintervall, in welches die aktuell angezeigte Tageszeit "17:23" fällt. In diesem Zeitintervall ist das radial innerste Segment aktiviert und als Balken dargestellt.

Der Schalt- und Anzeigebereich 25 in Fig. 4 dient als Ausschaltknopf. Die Tatsache, dass es sich hierbei um einen aktivierbaren Schaltknopf handelt ist durch das Vorhandensein des Rahmens angedeutet.

Bei dem Schalt- und Anzeigebereich 27 in Fig. 4 handelt es sich um einen Verriegelungs-Schaltknopf. Auch hier ist die Funktion als auslösbarer Schaltknopf durch das Vorhandenseins des Rahmens symbolisiert. Der weitere Schalt- und Anzeigebereich 29 in Fig. 4 dient für das Einschalten einer Boost-Funktion, die weiter unten erläutert wird. Der vorhandene Rahmen lässt auch in diesem Fall erkennen, dass es sich um einen aktivierbaren Schaltknopf handelt.

Schließlich zeigt Fig. 4 einen Schalt- und Anzeigebereich 31, der als aktivierbarer Schaltknopf erkennbar ist und welcher für das Aktivieren der Betriebsweise "Programmierung" dient.

Durch das Drücken bzw. Berühren dieses Schaltknopfs 31 und gegebenenfalls das Berühren weiterer Schaltknöpfe gelangt man zu der in Fig. 5 dargestellten Anzeige der Touchscreen-Anzeige- und Eingabeeinheit. Hierbei handelt es sich um einen bestimmten Funktionszustand in der Betriebsweise "Programmierung". Die Ziffer 4, die als einzige im Schalt- und Anzeigebereich 19 für die Wochentagsanzeige dargestellt ist, zeigt an, dass das Profil für den Heizmodus, welches mittels der 24-Stunden-Zeitscala 13 dargestellt ist, für den vierten Wochentag gilt. Das Symbol der Analoguhr im Schalt-und Anzeigebereich 17 zeigt an, dass das mittels der 24-Stunden-Anzeige 13 dargestellt Profil für den Heizmodus für den "Normalbetrieb" gilt.

In diesem Funktionszustand der Betriebsweise "Programmierung", in dem der Heizmodus vorwählbar ist, kann die Anzeige der Balkenanzeigen der einzelnen Zeitintervalle 15 beispielsweise blinkend dargestellt sein. Durch das Berühren der einzelnen Segmente der Balkenanzeigen kann das jeweilige Segment vom Status "aktiviert" in den Status "deaktiviert" und umgekehrt überführt werden.

Auf diese Weise lässt sich einfach und schnell das gewünschte Profil für den Heizmodus eingeben. Soll dieser Funktionszustand ohne Übernahme der eingegebenen Änderungen abgebrochen werden, so kann der Schalt- und Anzeigebereich 33 bzw. der hierdurch repräsentierte Schaltknopf gedrückt werden. Sollen die vorgenommenen Änderungen übernommen werden, so muss der Schalt- und Anzeigebereich 31 gedrückt werden. Auf diese Weise gelangt man zu einer nicht näher dargestellten Anzeige, in der der jeweils nächste Wochentag ausgewählt werden kann, für den das jeweilige Profil für den Heizmodus festgelegt werden soll. Wird auch dieser Funktionszustand verlassen, so gelangt man wieder in diejenige Betriebsweise, aus der heraus die Betriebsweise "Programmierung" aktiviert wurde, also beispielsweise in die Betriebsweise "Normalbetrieb".

Selbstverständlich können bei der in der Zeichnung dargestellten Temperaturregelvorrichtung 1 auch für jeden Heizmodus die erforderlichen Parameter, wie beispielsweise die jeweilige Solltemperatur T_{soll,i} oder auch eine entsprechende absolute oder relative Heizleistung P_{soll,i} festgelegt werden. Dies erfolgt ebenfalls durch das Drücken der entsprechenden Schaltknöpfe.

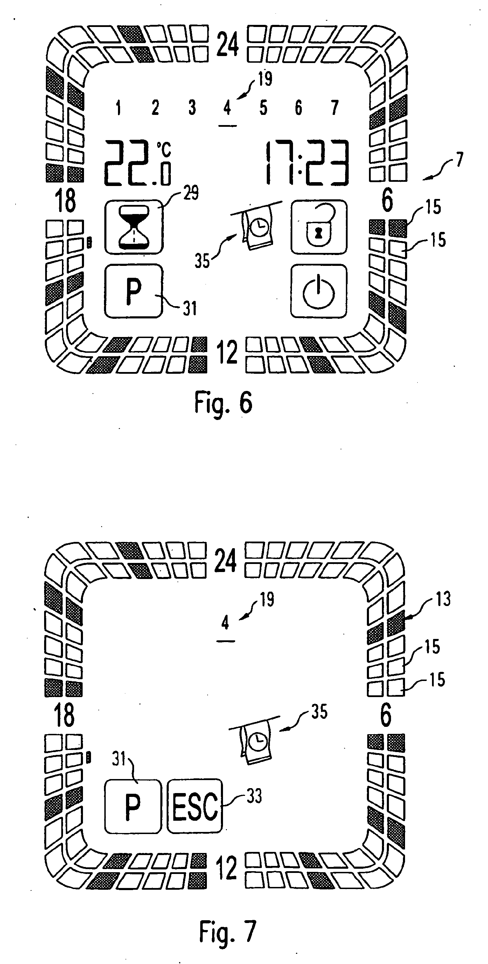

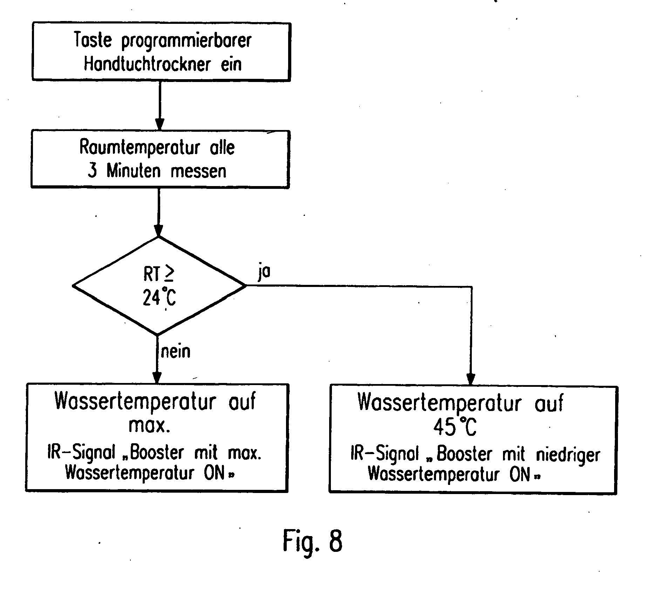

Fig. 6 zeigt eine Anzeige der Touchscreen-Anzeige- und Eingabeeinheit 7, bei der die Betriebsweise "Trocknen" gewählt wurde. Dies ist durch das nicht umrahmte Symbol eines zum Trocknen aufgehängten Handtuchs innerhalb des Schalt- und Anzeigebereichs 35 erkennbar. Ebenso wie in der Betriebsweise "Normalbetrieb" ist auch der aktuelle Wochentag aus dem Schalt- und Anzeigebereich 19 erkennbar. Die 24-Stunden-Zeitscala zeigt auch in diesem Fall das Profil für den Heizmodus für die Betriebsweise "Trocknen" an. Die Bedeutung der Segmentanzeigen in den einzelnen Zeitintervallen 15 kann hier jedoch gegenüber der betreffenden Bedeutung in der Funktionsweise "Normalbetrieb" eine andere sein. Zur Realisierung der Betriebsweise "Trocknen" bietet sich insbesondere an, das Stellglied so anzusteuern, dass die Heizvorrichtung eine bestimmte Solltemperatur T_{soll,i} aufweist. Ein unmittelbares Abstellen auf die Raumtemperatur ist in dieser Betriebsweise weniger wünschenswert. Es ist jedoch möglich, wie unten anhand von Fig. 8 erläutert werden wird, eine gewisse Abhängigkeit von der Raumtemperatur zu berücksichtigen.

Ohne eine derartige Raumtemperatur abhängige Funktionsweise bietet es sich beispielsweise an, in der Betriebsweise "Trocknen" nur zwei Heizmodi vorzusehen, nämlich einen Heizmodus "Heizung Aus" für diejenigen Zeitintervalle, in denen keine Trockenfunktion gewünscht ist, und einen Heizmodus "Heizen mit vorbestimmter Heizleistung Pₛₒₗₗ" oder "Heizen auf vorgegebene Solltemperatur (der Heizvorrichtung) Tₛₒₗₗ".

Fig. 7 zeigt eine Anzeige der Touchscreen-Anzeige- und Eingabeeinheit 7 in der Betriebsart "Programmierung" in einem Funktionszustand, in dem die Festlegung des Profils für den Heizmodus erfolgen kann. In diesen Zustand kann man beispielsweise durch das Drücken des Schaltknopfs, repräsentiert durch den Schalt- und Anzeigebereich 31, ausgehend vom Funktionszustand nach Fig. 6 bzw. durch das Drücken weiterer Schaltknöpfe gelangen. Die Darstellung in Fig. 7 lässt wiederum erkennen, dass im dargestellten Funktionszustand das Profil für den Heizmodus für den vierten Wochentag bestimmbar ist. In dieser Darstellung können wiederum die einzelnen Balkenanzeigen jedes Zeitintervalls 15 der 24-Stunden-Zeitscala 13 (bzw. nur die bereits aktivierten Segmente der Balkenanzeigen) blinken, um die Auswählbarkeit der Segmente der Balkenanzeigen zu verdeutlichen.

Sind, wie bei der in Fig. 6 und 7 dargestellten Ausführungsform in der Betriebsweise "Trocknen" nicht unterschiedliche programmierbare Heizmodi vorgesehen, so kann durch das Berühren eines der beiden Segmente einer Balkenanzeige eines Zeitintervalls 15 bewirkt werden, dass für dieses Zeitintervall der jeweilige Heizmodus "Trocknen" aktiviert wird. Sind jedoch unterschiedlich Heizmodi vorwählbar, so kann das Aktivieren der einzelnen Heizmodi in gleicher Weise erfolgen, wie dies oben im Zusammenhang mit der Festlegung des Profils für den Heizmodus für die Betriebsweise "Normalbetrieb" beschrieben wurde.

Der Funktionszustand in Fig. 7 kann wiederum durch das Berühren des Schaltknopfs 33 ohne Übernahme der Änderungen abgebrochen oder durch das Berühren des Schaltknopfs 31 übernommen werden.

Fig. 8 zeigt eine Ausführungsform zur Realisierung der Betriebsweise "Trocknen", die eine Berücksichtigung der Raumtemperatur ermöglicht. Beträgt die Raumtemperatur im dargestellten Ausführungsbeispiel mehr als 24°C, so wird in der Betriebsweise "Trocknen" lediglich auf eine niedrigere Wassertemperatur von 45° aufgeheizt. Vorausgesetzt wird hier ein wassergefüllter bzw. von Wasser als Heizmedium durchströmter Heizkörper.

Beträgt die Raumtemperatur weniger als 24°C, so wird die Heizvorrichtung auf eine maximale vorgegebene Wassertemperatur aufgeheizt. Diese Wassertemperatur kann beispielsweise 60° betragen.

Der in Fig. 8 dargestellte Ablauf wird nach jeweils drei Minuten wiederholt, wobei jeweils die aktuelle Raumtemperatur erfasst wird, die sich durch die relativ hohe Energiezufuhr in der Betriebsweise "Trocknen" schnell erhöhen kann.

Durch die in Fig. 8 dargestellte Maßnahme kann verhindert werden, dass trotz der Betriebsweise "Trocknen" ein Überhitzen des jeweiligen Raums erfolgt. Dennoch ergibt sich ein ausreichend schnelles Trocknen des betreffenden Wäschestücks. Gleichzeitig wird durch diese Maßnahme der Energieverbrauch reduziert.

Mittels des bereits oben angesprochenen Schalt- und Anzeigebereichs 29 (Figs. 4, 4 und 6) kann aus der jeweiligen Betriebsweise bzw. aus dem jeweiligen Funktionszustand der Temperaturregelvorrichtung 1 heraus die Boost-Funktion aktiviert werden. In der Betriebsweise "Boost" erzeugt die Auswerte- und Steuereinheit 9 ein Steuersignal S, welches so beschaffen ist, dass die Heizvorrichtung eine feste oder vorgebbare maximale Heizleistung abgibt. Beispielsweise kann in dieser Betriesweise ein entsprechender Heizkörper oder das darin enthaltenen Heizmedium auf eine Solltemperatur von 60 °C geregelt werden. Aus Gründen der Einfachheit kann diese Solltemperatur nichtveränderbar vorgegeben sein. Selbstverständlich ist jedoch auch das Vorsehen einer programmierbaren Solltemperatur T_{boost} für die Betriebsweise "boost" möglich.

## Patentansprüche

1. Temperaturregelvorrichtung für eine Heizvorrichtung, insbesondere einen Badheizkörper,
(a) mit einer Auswerte- und Steuereinheit (9),
(i) welche in einer Betriebsweise "Normalbetrieb" entsprechend einem vorgegebenen zeitlichen Verlauf für den Heizmodus einer Heizvorrichtung ein Ansteuersignal (5) für ein Stellglied zur Veränderung der Heizleistung der Heizvorrichtung erzeugt, wobei sich der zeitliche Verlauf aus einer Vielzahl von Zeitintervallen (15) zusammensetzt, für die jeweils ein während des betreffenden Intervalls (15) wirksamer, aktueller Heizmodus festgelegt ist, der von einer der folgenden Alternativen umfasst ist:
• Während eines aktiven Heizmodus "Heizung Aus" erzeugt die Auswerte- und Steuereinheit (9) ein Ansteuersignal (5), mit dem das Stellglied so angesteuert wird, dass die Heizvorrichtung kcine Heizleistung abgibt;
• Während eines oder mehrerer möglicher Heizmodi "Heizen auf vorgegebene Solltemperatur T_{soll,i}" erzeugt die Auswerte- und Steuereinheit (9) jeweils ein Ansteuersignal (5), mit dem das Stellglied so angesteuert wird, dass die Heizvorrichtung eine zur Erreichung einer vorgegebenen Solltemperatur geeignete Heizleistung abgibt;
• Während eines oder mehrerer möglicher Heizmodi "Heizen mit vorbestimmter Sollheizleistung P_{soll,i}" erzeugt die Auswerte- und Steuereinheit (9) jeweils ein Ansteuersignal (5), mit dem das Stellglied so angesteuert wird, dass die Heizvorrichtung, eine absolut oder relativ vorgegebene Heizleistung abgibt;
(ii) welche in einer Betriebsweise "Programmierung" das Eingeben und Speichern des zeitlichen Verlaufs für den Heizmodus und für den einen oder die mehreren diskreten Werte für die Solltemperatur T_{soll,i} oder die Sollheizleistung P_{soll,i} ermöglicht, und
(b) mit einer mit der Auswerte- und Steuereinheit (9) verbundenen Touch-screen-Anzeige- und Eingabeeinheit (7), auf welcher eine in die Vielzahl der einzelnen Zeitintervalle (15) aufgeteilte Zeitskala (13) zur Darstellung des vorgegebenen zeitlichen Verlaufs für die Solltemperatur fest abgebildet ist oder während des Betriebs der Temperaturregelvorrichtung (1) abgebildet wird,
(c) wobei die Auswerte- und Steuereinheit (9) in der Betriebsweise "Normalbetrieb" die Touchscreen-Anzeige- und Eingabeeinheit (7) so ansteuert, dass für jedes Zeitintervall (15) der Zeitskala (13) der im betreffenden Zeitintervall (15) wirksame Heizmodus grafisch dargestellt wird,
**dadurch gekennzeichnet,**
(d) **dass** mehrere mögliche Heizmodi "Heizen auf vorgegebene Solltemperatur T_{soll,i}" oder mehrere mögliche Heizmodi "Heizen mit vorbestimmter Sollheizleistung P_{soll,i}" vorgesehen sind,
(e) **dass** für jedes Zeitintervall (15) der Zeitskala (13) sowohl in der Betriebsweise "Programmierung" als auch in der Betriebsweise "Normalbetrieb" eine aus mehreren Segmenten bestehender Balkenanzeige vorgesehen ist, wobei jedes Segment den Status "aktiviert" oder "deaktiviert" annehmen kann, und
(f) **dass** die Auswerte- und Steuereinheit (9) so ausgebildet ist, dass in einer Betriebsweise "Programmierung" durch das Berühren der Segmente der Balkenanzeigen der für das betreffende Zeitintervall (15) während der Betriebsweise "Normalbetrieb" wirksame Heizmodus eingebbar ist.

2. Temperaturregelvorrichtung nach Anspruch 1, **dadurch gekennzeichnet, dass** die Zeitskala (13) eine 24-Stunden-Zeitskala ist.

3. Temperaturregelvorrichtung nach Anspruch 2, **dadurch gekennzeichnet, dass** die Auswerte- und Steuereinheit (9) und die Touchscreen-Anzeige- und Eingabeeinheit (7) so ausgebildet sind, dass in der Betriebsweise "Programmierung" für jeden Wochentag ein 24-Stundenverlauf des Heizmodus gespeichert werden kann.

4. Temperaturregelvorrichtung nach einem der vorhergehenden Ansprüche, **dadurch gekennzeichnet, dass** die Anzeige eines Balkens, bei dem sämtliche Segmente den Status "deaktiviert" aufweisen, dem Heizmodus "Heizung Aus" entspricht und die Anzeige eines Balkens mit einer Anzahl von i aufeinander folgenden Segmenten dem Heizmodus "Heizen auf vorgegebene Solltemperatur T_{soll,i}" oder "Heizen mit vorbestimmter Sollheizleistung P_{soll,i}".

5. Temperaturregelvorrichtung nach einem der vorhergehenden Ansprüche, **dadurch gekennzeichnet, dass** die Zeitskala (13) als geschlossener Ring auf der Touchscreen-Anzeige- und Eingabeeinheit (7) fest abgebildet ist oder während des Betriebs der Temperaturregelvorrichtung (1) abgebildet wird.

6. Temperaturregelvorrichtung nach einem der vorhergehenden Ansprüche, **dadurch gekennzeichnet, dass** die Zeitskala (13) zusätzlich zur Anzeige des in jedem Zeitintervall (15) wirksamen Heizmodus eine Anzeige der aktuellen Zeit umfasst.

7. Temperaturegelvorrichtung nach einem der vorhergehenden Ansprüche, **dadurch gekennzeichnet, dass** die Balkenanzeige ein Segment umfasst, welches aktiviert wird, wenn die aktuelle Zeit innerhalb des betreffenden Zeitintervalls (15) liegt.

8. Temperaturregelvorrichtung nach einem der vorhergehenden Ansprüche, **dadurch gekennzeichnet, dass** auf der Touchscreen-Anzcige- und Eingabeeinheit (7) mehrere Schalt- und Anzeigebereiche (17 bis 35) definiert sind, wobei jeder Schalt- und Anzeigebereich (17 bis 35) je nach dem Funktionszustand der Temperaturregelvorrichtung sowohl als Schaltknopf dienen kann, der gleichzeitig anzeigt, welche ihm zugeordnete Funktion bei Berührung ausgelöst werden kann, als auch als reine Anzeige der betreffenden gewählten Funktion, wobei jedem Schalt- und Anzeigebereich (17 bis 35) in seiner Funktion als Schaltknopf eine andere grafische Ausgestaltung zugeordnet ist als in seiner Funktion als reine Anzeige.

9. Temperaturregelvorrichtung nach einem der vorhergehenden Ansprüche, **dadurch gekennzeichnet, dass** zusätzlich zu den Betriebsweisen "Normalbetrieb" und "Programmierung" eine Betriebsweise "Boost" vorgesehen ist, wobei die Auswerte- und Steuereinheit (9) nach einem Start der Betriebsweise "Boost" ein Ansteuersignal (5) erzeugt, welches das Stellglied der Heizvorrichtung so ansteuert, dass diese die maximale oder eine vorgegebene Boost-Sollheizleistung P_{soll,boost} abgibt oder eine vorgegebene Boost-Solltemperatur T_{soll,boost} erzeugt.

10. Temperaturregelvorrichtung nach Anspruch 9, **dadurch gekennzeichnet, dass** die Betriebsweise "Boost" nach dem Start für eine vorbestimmte Zeitspanne beibehalten wird.

11. Temperatutregelvorrichtung nach einem der vorhergehenden Ansprüche, **dadurch gekennzeichnet, dass** zusätzlich zu den Betriebsweisen "Nonnalbetrieb"' und "Programmierung" eine Betriebsweise "Trocknen" vorgesehen ist, wobei für diese Betriebsweise ein separater zeitlicher Verlauf für den Heizmodus vorgesehen ist, welcher mittels der Touchscreen-Anzeige- und Eingabeeinheit (7) bei Auswahl der Betriebsweise "Trocknen" analog zur Anzeige des Verlaufs des Heizmodus in der Betriebsweise "Normalbetrieb" angezeigt wird und welcher in der Betriebsweise "Programmierung" separat und analog zur Programmierung des Verlaufs des Heizmodus für die Betriebsweise "Normalbetrieb" programmierbar ist.

12. Temperaturegelvorrichtung nach Anspruch 11, **dadurch gekennzeichnet, dass** die Auswerte- und Steuereinheit (9) nach einem Start der Betriebsweise "Trocknen" ein Ansteuersignal (5) erzeugt, welches das Stellglied der Heizvorrichtung so ansteuert, dass diese die maximale oder eine vorgegebene Trocknung-Sollheizleistung P_{soll,trocknen} abgibt oder eine vorgegebene Trocknungs-SoIItemperatur T_{soll,trocknene} erzeugt (Heizmodus "Trocknen").

13. Temperaturregelvorriehtung nach Anspruch 11 oder 12, **dadurch gekennzeichnet, dass** bei Überschreiten eines vorgegebenen Wertes für die Isttemperatur des Raums, in dem sich die Heizvorrichtung befindet, ein erster, niedrigerer Wert für die vorgegebene Trocknungs-Sollheizleistung P_{soll,trocknen,1} oder die vorgegebene Trocknungs-Solltemperatur T_{soll,trocknen,1} verwendet wird und bei Unterschreiter des vorgegebenen Wertes für die Isttemperatur ein zweiter, höherer Wert für die vorgegebene Trocknungs-Sollheizleistung P_{soll,trocknen,2} oder die vorgegebene Trocknungs-Solltemperatur T_{soll,trockne,2}.

14. Temperaturregelvorrichtung nach einem der Ansprüche 11 bis 13, **dadurch gekennzeichnet, dass** die Auswerte- und Steuereinheit (9) bei Aktivierung der Betriebsweise "Trocknen" während der Betriebsweise "Normalbetrieb" das Steuersignal (5) ausschließlich abhängig vom gespeicherten Verlauf des Heizmodus für die Betriebsweise "Trocknen" erzeugt.

15. Temperaturregelvorrichtung nach einem der Ansprüche 11 bis 13, **dadurch gekennzeichnet, dass** die Auswerte- und Steuereinheit (9) bei Aktivierung der Betriebsweise "Trocknen" während der Betriebsweise "Normalbetrieb" das Steuersignal (5) abhängig vom gespeicherten Verlauf des Heizmodus für die Betriebsweise "Trocknen" und abhängig vom Verlauf des Heizmodus für die Betriebsweise "Normalbetrieb" erzeugt, wobei für jedes Zeitintervall jeweils der höhere Wert für die vorgegebene Solltemperatur T_{soll,i} oder die vorbestimmte Sollheizleistung P_{soll,i} der beiden zeitlichen Verläufe für den Heizmodus verwendet wird.

16. Temperaturregelvornchtung nach einem der vorhergehenden Ansprüche, **dadurch gekennzeichnet, dass** ein interner Temperatursensor (11) zur Erfassung einer Isttemperatur vorgesehen ist oder der Temperaturregeivorrichtung das Signal eines externen Temperatursensors zur Erfassung einer Isttemperatur zugeführt ist und dass die Auswert- und Steuereinheit (9) das Steuersignal für das Stellglied zur Veränderung der Heizleistung der Heizvorrichtung im Sinne einer geschlossenen Regelschleife durch einen Vergleich einer für das betreffende Zeitintervall (15) vorgegebenen Solltemperatur Tₛₒₗₗ mit der erfassten Isttemperatur Tᵢₛₜ erzeugt.

## Claims

1. Temperature control device for a heating device, in particular a heating radiator for bathrooms,
a) with an evaluation and control unit (9),
i which in an operating mode "Normal operation" according to a predetermined time sequence for the heating mode of a heating device produces a trigger signal (5) for an actuator to change the heat output of the heating device, wherein the time sequence is composed of a plurality of time intervals (15), for which a current heating mode active during the relevant interval (15) is set respectively, which heating mode is covered by one of the following alternatives:
• during an active heating mode "Heating off", the evaluation and control unit (9) produces a trigger signal (5) with which the actuator is activated such that the heating device does not emit any heat output;
• during one or more possible heating modes "Heat to predetermined target temperature T_{target,i}", the evaluation and control unit (9) produces a trigger signal (5) in each case with which the actuator is activated such that the heating device emits a heat output suitable for attaining a predetermined target temperature;
• during one or more possible heating modes "Heat to preset target heat output P_{target,i}", the evaluation and control unit (9) produces a trigger signal (5) in each case with which the actuator is activated such that the heating device emits a heat output that is preset absolutely or relatively;
ii which in an operating mode "Programming" enables the input and storage of the time sequence for the heating mode and for the one or more discrete values for the target temperature T_{target,i} or the target heat output P_{target,i}, and
b) with a touchscreen display and input unit (7) connected to the evaluation and control unit (9), on which display and input unit a time scale (13) divided into the plurality of the individual time intervals (15) for showing the predetermined time sequence for the target temperature is fixedly displayed or is displayed during operation of the temperature control device (1),
c) wherein, in the operating mode "Normal operation", the evaluation and control unit (9) activates the touchscreen display and input unit (7) such that for each time interval (15) of the time scale (13) the heating mode active in the relevant time interval (15) is displayed graphically,
**characterized in that**
d) several possible heating modes "Heat to predetermined target temperature T_{target,i}" or several possible heating modes "Heat at preset target heat output P_{target,i}" are provided,
e) that for each time interval (15) of the time scale (13) in both the "Programming" operating mode and in the "Normal operation" operating mode a bar display consisting of several segments is provided, wherein each segment can assume the status "activated" or "deactivated", and
f) that the evaluation and control unit (9) is formed so that in a "Programming" operating mode, the heating mode active for the relevant time interval (15) during the "Normal operation" operating mode can be entered by touching the segments of the bar displays.

2. Temperature control device according to claim 1, **characterized in that** the time scale (13) is a 24-hour time scale.

3. Temperature control device according to claim 2, **characterized in that** the evaluation and control unit (9) and the touchscreen display and input unit (7) are formed so that in the "Programming" operating mode, a 24-hour sequence of the heating mode can be stored for each day of the week.

4. Temperature control device according to one of the preceding claims, **characterized in that** the display of a bar, in which all segments have the status "deactivated", corresponds to the heating mode "Heating off" and the display of a bar with a number of i consecutive segments corresponds to the heating mode "Heat to predetermined target temperature T_{target,i}" or "Heat at preset target heat output P_{target,i}".

5. Temperature control device according to one of the preceding claims, **characterized in that** the time scale (13) is displayed fixedly on the touchscreen display and input unit (7) or is displayed during the operation of the temperature control device (1) as a closed ring.

6. Temperature control device according to one of the preceding claims, **characterized in that** the time scale (13) comprises a display of the current time in addition to the display of the heating mode active in each time interval (15).

7. Temperature control device according to one of the preceding claims, **characterized in that** the bar display comprises a segment which is activated if the current time lies within the relevant time interval (15).

8. Temperature control device according to one of the preceding claims, **characterized in that** several switching and display areas (17 to 35) are defined on the touchscreen display and input unit (7), wherein each switching and display area (17 to 35) can be used, depending on the functional state of the temperature control device, both as a switch button, which simultaneously displays which function assigned to it can be triggered on contact, and as a pure display of the relevant function selected, wherein a different graphical configuration is assigned to each switching and display area (17 to 35) in its function as a switch button than in its function purely as a display.

9. Temperature control device according to one of the preceding claims, **characterized in that** in addition to the operating modes "Normal operation" and "Programming", a "Boost" operating mode is provided, wherein the evaluation and control unit (9), following a start of the "Boost" operating mode, produces a trigger signal (5), which activates the actuator of the heating device such that this emits the maximum or a preset boost target heat output P_{target,boost}, or produces a predetermined boost target temperature T_{target,boost}.

10. Temperature control device according to claim 9, **characterized in that** the "Boost" operating mode is retained for a preset timespan following the start.

11. Temperature control device according to one of the preceding claims, **characterized in that** in addition to the operating modes "Normal operation" and "Programming", a "Drying" operating mode is provided, wherein for this operating mode a separate time sequence is provided for the heating mode, which is displayed by means of the touchscreen display and input unit (7) on selection of the "Drying" operating mode in a manner similar to the display of the sequence of the heating mode in the operating mode "Normal operation" and which in the "Programming" operating mode is programmable in a manner similar to the programming of the sequence of the heating mode for the operating mode "Normal operation".

12. Temperature control device according to claim 11, **characterized in that** the evaluation and control unit (9), following a start of the "Drying" operating mode, produces a trigger signal (5), which activates the actuator of the heating device such that this emits the maximum or a preset drying target heat output P_{target,drying} or produces a predetermined drying target temperature T_{target,drying} ("Drying" heating mode).

13. Temperature control device according to claim 11 or 12, **characterized in that** when a predetermined value for the actual temperature of the room in which the heating device is located is exceeded, a first, lower value for the preset drying target heat output P_{target,drying,1} or the predetermined drying target temperature T_{target,drying,1} is used and when the actual temperature falls below the predetermined temperature, a second, higher value for the preset drying target heat output P_{target,drying,2} or the predetermined drying target temperature T_{target,drying,2} is used.

14. Temperature control device according to one of claims 11 to 13, **characterized in that** the evaluation and control unit (9) on activation of the "Drying" operating mode during the "Normal operation" operating mode produces the control signal (5) exclusively in dependence on the stored sequence of the heating mode for the "Drying" operating mode.

15. Temperature control device according to one of claims 11 to 13, **characterized in that** the evaluation and control unit (9), on activation of the "Drying" operating mode during the operating mode "Normal operation", produces the control signal (5) in dependence on the stored sequence of the heating mode for the operating mode "Drying" and in dependence on the sequence of the heating mode for the operating mode "Normal operation", wherein for each time interval respectively the higher value for the predetermined target temperature T_{target,i} or the preset target heat output P_{target,i} of the two time sequences for the heating mode is used.

16. Temperature control device according to one of the preceding claims, **characterized in that** an internal temperature sensor (11) is provided for detecting an actual temperature or the signal of an external temperature sensor for detecting an actual temperature is supplied to the temperature control device and that the evaluation and control unit (9) produces the control signal for the actuator to change the heat output of the heating device in the sense of a closed control loop by a comparison of a target temperature T_{target} predetermined for the relevant time interval (15) with the detected actual temperature T_{actual}.

## Revendications

1. Dispositif de régulation de température pour un dispositif de chauffage, en particulier un radiateur de chauffage de bain,
(a) comprenant une unité d'exploitation et de commande (9),
(i) qui génère, en mode de fonctionnement "fonctionnement normal" qui correspond à un déroulement prédéterminé dans le temps pour le mode de chauffage d'un dispositif de chauffage, un signal de commande (5) pour un élément de réglage permettant de modifier la puissance de chauffage du dispositif de chauffage, le déroulement dans le temps se composant d'une pluralité d'intervalles de temps (15), pour lesquels on détermine respectivement un mode de chauffage actuel efficace au cours de l'intervalle concerné (15), qui est compris dans l'une des options suivantes :
• au cours d'un mode de chauffage actif "chauffage arrêté", l'unité d'exploitation et de commande (9) génère un signal de commande (5) avec lequel l'élément de réglage est commandé, de sorte que le dispositif de chauffage ne délivre aucune puissance de chauffage ;
• au cours d'un ou plusieurs modes de chauffage possibles "chauffage à température théorique prédéterminée T_{théo,i}", l'unité d'évaluation et de commande (9) génère un signal de commande (5) avec lequel l'élément de réglage est commandé, de sorte que le dispositif de chauffage délivre une puissance de chauffage convenant à l'obtention d'une température théorique prédéterminée ;
• au cours d'un ou plusieurs modes de chauffage possibles "chauffage à puissance de chauffage théorique prédéterminée P_{théo,i}", l'unité d'exploitation et de commande (9) génère un signal de commande (5) avec lequel l'élément de réglage est commandé, de sorte que le dispositif de chauffage délivre une puissance de chauffage absolument ou relativement prédéterminée ;
(ii) qui permet, en mode de fonctionnement "programmation", de saisir et de mémoriser le déroulement dans le temps pour le mode de chauffage et pour une ou plusieurs valeurs discrètes pour la température théorique T_{théo,i} ou puissance de chauffage théorique P_{théo,i}, et
(b) comprenant, une unité d'affichage et de saisie sur écran tactile (7), connectée à l'unité d'exploitation et de commande (9) et sur laquelle est illustrée une échelle de temps (13) divisée en la pluralité des intervalles de temps individuels (15) pour représenter le déroulement dans le temps prédéterminé pour la température théorique de manière fixe, ou au cours du fonctionnement du dispositif de régulation de température (1),
(c) l'unité d'exploitation et de commande (9) en mode de fonctionnement "fonctionnement normal" commandant l'unité d'affichage et de saisie sur écran tactile (7) de manière à représenter graphiquement, pour chaque intervalle de temps (15) de l'échelle de temps (13), le mode de chauffage efficace dans l'intervalle de temps concerné (15),
**caractérisé en ce que**
(d) plusieurs modes de chauffage possibles "chauffage à température théorique prédéterminée T_{théo,i} "ou plusieurs modes de chauffage possibles "chauffage à puissance de chauffage théorique prédéterminée P_{théo,i} " sont prévus,
(e) pour chaque intervalle de temps (15) de l'échelle de temps (13), il est prévu en mode de fonctionnement "programmation" ainsi qu'en mode de fonctionnement "fonctionnement normal" un diagramme à barres constitué de plusieurs segments, chaque segment pouvant adopter le statut "activé" ou "désactivé", et
(f) l'unité d'exploitation et de commande (9) se présente de manière que, en mode de fonctionnement "programmation", on puisse saisir le mode de chauffage efficace pour l'intervalle de temps concerné (15) au cours du mode de fonctionnement "fonctionnement normal" par contact des segments des diagrammes à barres.

2. Dispositif de régulation de température selon la revendication 1, **caractérisé en ce que** l'échelle de temps (13) est une échelle de temps de 24 heures.

3. Dispositif de régulation de température selon la revendication 2,
**caractérisé en ce que** l'unité d'exploitation et de commande (9) et l'unité d'affichage et de saisie sur écran tactile (7) sont réalisées de manière à pouvoir mémoriser, en mode de fonctionnement "programmation", un déroulement de 24 heures du mode de chauffage pour chaque jour de la semaine.

4. Dispositif de régulation de température selon l'une quelconque des revendications précédentes, **caractérisé en ce que** l'affichage d'une barre, dans laquelle l'ensemble des segments présente le statut "désactivé", correspond au mode de chauffage "chauffage arrêté" et l'affichage d'une barre avec un certain nombre de segments i successifs correspond au mode de chauffage "chauffage à température théorique prédéterminée T_{théo,i} " ou "chauffage à puissance de chauffage théorique prédéterminée P_{théo,i}".

5. Dispositif de régulation de température selon l'une quelconque des revendications précédentes, **caractérisé en ce que** l'échelle des temps (13) est illustrée sous forme d'anneau fermé sur l'unité d'affichage et de saisie sur écran tactile (7) de manière fixe ou au cours du fonctionnement du dispositif de régulation de température (1).

6. Dispositif de régulation de température selon l'une quelconque des revendications précédentes, **caractérisé en ce que** l'échelle des temps (13) comprend, en plus de l'affichage du mode de chauffage efficace dans chaque intervalle de temps (15), un affichage du temps actuel.

7. Dispositif de régulation de température selon l'une quelconque des revendications précédentes, **caractérisé en ce que** le diagramme à barres comprend un segment qui est activé lorsque le temps actuel se situe à l'intérieur de l'intervalle de temps concerné (15).

8. Dispositif de régulation de température selon l'une quelconque des revendications précédentes, **caractérisé en ce que** plusieurs zones de commutation et d'affichage (17 à 35) sont définies sur l'unité d'affichage et de saisie sur écran tactile (7), chaque zone de commutation et d'affichage (17 à 35) pouvant servir, en fonction de l'état de fonctionnement du dispositif de régulation de température, autant de bouton commutateur qui indique simultanément la fonction qui lui est affectée et peut être déclenchée par contact, que de simple affichage de la fonction concernée choisie, chaque zone de commutation et d'affichage (17 à 35) se voyant affecter dans sa fonction comme bouton commutateur une autre réalisation graphique que dans sa fonction comme simple affichage.

9. Dispositif de régulation de température selon l'une quelconque des revendications précédentes, **caractérisé en ce que,** outre les modes de fonctionnement "fonctionnement normal" et "programmation", il est prévu un mode de fonctionnement "mode amplifié", l'unité d'exploitation et de commande (9) générant, après un démarrage du mode de fonctionnement "mode amplifié", un signal de commande (5) qui commande l'élément de réglage du dispositif de chauffage, de sorte que celui-ci délivre la puissance de chauffage théorique maximale ou une puissance de chauffage théorique amplifiée préterminée P_{théo,ampl} ou génère une température théorique amplifiée prédéterminée T_{théo,ampl}.

10. Dispositif de régulation de température selon la revendication 9, **caractérisé en ce que** le mode de fonctionnement "mode amplifié" est maintenu pendant un laps de temps prédéterminé après le démarrage.

11. Dispositif de régulation de température selon l'une quelconque des revendications précédentes, **caractérisé en ce que,** outre les modes de fonctionnement "fonctionnement normal" et "programmation", il est prévu un mode de fonctionnement "séchage", dans lequel, pour ce mode de fonctionnement, il est prévu un déroulement dans le temps séparé pour le mode de chauffage, qui est affiché à l'aide de l'unité d'affichage et de saisie sur écran tactile (7) en cas de sélection du mode de fonctionnement "séchage" de manière analogue à l'affichage du déroulement du mode de chauffage dans le mode de fonctionnement "fonctionnement normal", et qui peut être programmé dans le mode de fonctionnement "programmation" séparément et de manière analogue à la programmation du déroulement du mode de chauffage pour le mode de fonctionnement "fonctionnement normal".

12. Dispositif de régulation de température selon la revendication 11, **caractérisé en ce que** l'unité d'exploitation et de commande (9) génère un signal de commande (5) après un démarrage du mode de fonctionnement "séchage", qui commande l'élément de réglage du dispositif de chauffage, de sorte que celui-ci délivre la puissance de chauffage théorique et de séchage maximale ou une puissance de chauffage théorique et de séchage prédéterminée P_{théo,séch} ou génère une température théorique de séchage prédéterminée T_{théo,séch} (mode de chauffage "séchage").

13. Dispositif de régulation de température selon la revendication 11 ou 12, **caractérisé en ce qu'**en cas de dépassement d'une valeur prédéterminée pour la température réelle de la pièce, dans laquelle se trouve le dispositif de chauffage, on utilise une première valeur inférieure pour la puissance de chauffage prédéterminée et de séchage P_{théo,séch,1} ou la température théorique de séchage prédéterminée T_{théo,séch,1} et, en cas de température réelle de la pièce inférieure à la valeur prédéterminée on utilise, une deuxième valeur supérieure pour la puissance de chauffage théorique et de séchage prédéterminée P_{théo,séch,2} ou la température théorique de séchage prédéterminée T_{théo,séch,2}.

14. Dispositif de régulation de température selon l'une quelconque des revendications 11 à 13, **caractérisé en ce que** l'unité d'exploitation et de commande (9) génère, en cas d'activation du mode de fonctionnement "séchage" pendant le mode de fonctionnement "fonctionnement normal", le signal de commande (5) exclusivement en fonction du déroulement mémorisé du mode de chauffage pour le mode de fonctionnement "séchage".

15. Dispositif de régulation de température selon l'une quelconque des revendications 11 à 13, **caractérisé en ce que** l'unité d'exploitation et de commande (9) génère, en cas d'activation du mode de fonctionnement "séchage" pendant le mode de fonctionnement "fonctionnement normal", le signal de commande (5) en fonction du déroulement mémorisé pour le mode de fonctionnement "séchage" et en fonction du déroulement du mode de chauffage pour le mode de fonctionnement "fonctionnement normal", dans lequel on utilise, pour chaque intervalle de temps, respectivement, la plus grande valeur pour la température théorique prédéterminée T_{théo,i} ou la puissance de chauffage théorique prédéterminée P_{tnéo,i} des deux déroulements dans le temps pour le mode de chauffage.

16. Dispositif de régulation de température selon l'une quelconque des revendications précédentes, **caractérisé en ce que** l'on prévoit un capteur de température interne (11) pour saisir une température réelle ou l'on achemine au dispositif de régulation de température le signal d'un capteur de température externe pour saisir une température réelle et **en ce que** l'unité d'exploitation et de commande (9) génère le signal de commande pour l'élément de réglage afin de modifier la puissance de chauffage du dispositif de chauffage au sens d'une boucle de régulation fermée en comparant une température théorique prédéterminée T_{théo} pour l'intervalle de temps concerné (15) à la température réelle saisie T_{réel}.
